# EUROPEAN PATENT APPLICATION

(11) **EP 4 617 177 A1**
(43) Date of publication of application: **17.09.2025**
(21) Application number: 25164176.7
(22) Date of filing: 17.03.2025
(51) Int. Cl.: B64G 1/10, B64G 1/24, B64G 1/40, B64G 1/62, B64G 1/64

(54) **SYSTEMS AND METHODS FOR SATELLITE DEORBITING USING A SERVICER SPACECRAFT**

(30) Priority: 15.03.2024 US 202463565940 P
(71) Applicant: MacDonald, Dettwiler and Associates Inc., Brampton, Ontario L6Y 6K7 (CA)
(72) Inventor: Lymer, John, Brampton, Ontario, L6Y 6K7 (CA); Shi, Jian-Feng, Brampton, Ontario, L6Y 6K7 (CA)
(74) Representative: Grünecker Patent- und Rechtsanwälte PartG mbB

(57) **Abstract**

Systems and methods for servicing a client spacecraft are provided. The client spacecraft is in a client spacecraft orbit. The method includes: providing (702) a servicer spacecraft in a servicer spacecraft operating orbit, wherein the servicer spacecraft is equipped to phase between orbital planes and to rendezvous with the client spacecraft; establishing (704) contact between the servicer spacecraft and the client spacecraft; performing (706) a servicing operation on the client spacecraft with the servicer spacecraft; and releasing (708) the client spacecraft from the servicer spacecraft.

## Description

### Technical Field

The following relates generally to satellite servicing, and more particularly to systems and methods for satellite deorbiting using a servicer spacecraft.

### Introduction

As satellite constellations become more prevalent, satellite deorbiting is becoming an increasing concern. Existing approaches include carrying propellant onboard that is allocated for self-deorbit (e.g., 30% of full load). This can be costly and limit the operational life of the satellite. Satellite failures may also be experienced during the lifetime of the satellite that can affect a satellite's ability to self-deorbit or perform collision avoidance.

In general, active deorbiting of a constellation satellite approaches are desired and pursued as the industry-recognized standard and behavioral norm is to deorbit a satellite in a deliberate and controlled manner such that positive actions for collision avoidance are possible until below 400km apogee. Without this standard, other less sophisticated techniques become viable, such as strap-on solid rocket booster, drag sail, solar sail, or long tether on a dead satellite.

Accordingly, there is a need for an improved system and method for satellite deorbiting that overcomes at least some of the disadvantages of existing systems and methods.

### Summary

Systems and methods for satellite deorbiting using a servicer spacecraft are provided. The systems and methods may support satellite constellations, such as in low Earth orbit (LEO). The servicer spacecraft may perform active deorbiting or may support self-deorbiting of client spacecraft. The servicer spacecraft includes a robotic payload for executing its deorbiting functions.

In an embodiment, a servicer spacecraft acts as an electric propulsion (EP) tug. The servicer tows a constellation satellite out of the constellation orbit to low orbit. The servicer repeats this operation for each satellite in the constellation until the constellation's orbit is empty. The servicer includes a robotic payload or system. The robotic payload is configured to capture and secure the satellite being serviced. The servicer also includes maximum possible high pressure storable propellant or ion propulsion propellant (e.g., noble gases such as Krypton gas, Xenon gas, Argon gas) capacity for multiple trips. In some cases, an existing spacecraft bus may be modified to include the robotic payload and ion propulsion propellant capacity, such as by removing an RF payload.

In an embodiment, a servicer spacecraft acts as a refuellable tug. The refuellable servicer tows a constellation satellite out of the constellation orbit to low orbit. The servicer refills at a propellant depot and repeats towing for another constellation satellite. This can be repeated until the constellation's orbit is empty. The servicer includes a robotic payload or system and a large propellant tank. The robotic payload is configured to capture and secure the satellite being serviced. In some cases, an existing spacecraft bus may be modified to include the robotic payload and large propellant tank, such as by removing an RF payload and high-power equipment. The servicer also includes a refillable low pressure storable propellant system such as a hydrazine (N₂H₄) system. In some cases, an existing spacecraft bus may be modified to include the refillable low pressure storable propellant system, such as by replacing an EP propulsion system with the low pressure storable propellant system.

In an embodiment, a servicer spacecraft supports self-deorbit of constellation satellites. The servicer may be referred to as an electric propulsion replenishable fuel dispenser servicer. The servicer spacecraft includes a robotic payload or system. The robotic payload is configured to capture, secure, and/or add a propulsion pack to the satellite being serviced. The robotic payload is configured to image, identify, and measure the client satellite's fuel port interface when performing capture. The servicer spacecraft places an auxiliary propellant tank (also referred to as a deorbit module or auxiliary propellant module) using the robotic payload on each satellite in the constellation orbit for self-deorbit. The constellation satellite may be adapted to include an auxiliary fuel port. The auxiliary fuel port may be added when the satellite is being built. The servicer installs the auxiliary propellant module. The auxiliary propellant module may be a high pressure storable propellant or an ion propulsion propellant module, such as a Kr propellant module. The constellation spacecraft deorbits using the installed auxiliary propellant module.

In an embodiment, the EP tug servicer and the auxiliary propellant module installing servicer is the same servicer spacecraft.

A method of servicing a client spacecraft is provided. The client spacecraft is in a client spacecraft orbit. The method includes: providing a servicer spacecraft in a servicer spacecraft operating orbit, wherein the servicer spacecraft is equipped to phase between orbital planes and to rendezvous with the client spacecraft; establishing contact between the servicer spacecraft and the client spacecraft; and performing a servicing operation on the client spacecraft with the servicer spacecraft.

In some embodiments, the method further includes releasing the client spacecraft from the servicer spacecraft after performing the servicing operation.

In some embodiments, performing the servicing operation includes deorbiting the client spacecraft.

In some embodiments, de-orbiting the client spacecraft involves towing the client spacecraft using the servicer spacecraft to a low orbit which facilitates orbital decay.

In some embodiments, the servicer spacecraft returns to the servicer spacecraft operating orbit.

In some embodiments, the low orbit is a 400 km circular orbit or 350 km perigee elliptical orbit.

In some embodiments, the servicer spacecraft refuels itself with a tanker orbiting in-plane with the client spacecraft.

In some embodiments, the servicer spacecraft operating orbit is an in-plane orbit with the client spacecraft orbit.

In some embodiments, the servicing operation includes installing a fuel bubble to the client spacecraft.

In some embodiments, the servicing operation further includes self-deorbit of the client spacecraft.

In some embodiments, the client spacecraft self-deorbits by phasing itself to a low orbit which facilitates orbital decay.

In some embodiments, the servicer spacecraft orbit is parked in an elliptical orbit, and the servicer spacecraft matches the client spacecraft orbit right ascension of the ascending node (RAAN) prior to rendezvous and establishing contact.

In some embodiments, the servicing operation is one or more of an inspection operation and a repair operation.

In some embodiments, the servicer spacecraft operating orbit is an in-plane orbit with the client spacecraft orbit.

In some embodiments, the client spacecraft is part of a constellation of client spacecrafts.

In some embodiments, the servicer spacecraft is built using the same satellite bus design as the client spacecraft.

In some embodiments, the servicer spacecraft is launched alongside the client spacecraft comprising the constellation.

Other aspects and features will become apparent, to those ordinarily skilled in the art, upon review of the following description of some exemplary embodiments.

### Brief Description of the Drawings

The drawings included herewith are for illustrating various examples of articles, methods, and apparatuses of the present specification. In the drawings:
Figure 1 is a flow diagram of a general concept of operations method for a satellite deorbiting system including an electric propulsion (EP) servicer (or EP disposable tow truck), according to an embodiment;
Figure 2 is a flow diagram of a general concept of operations method for a satellite deorbiting system including a refuellable servicer (or refuellable N₂H₄ tow truck), according to an embodiment;
Figure 3 is a flow diagram of a general concept of operations method for a satellite deorbiting system including an EP fuel dispenser servicer spacecraft (or EP replenishable fuel dispenser and tow), according to an embodiment;

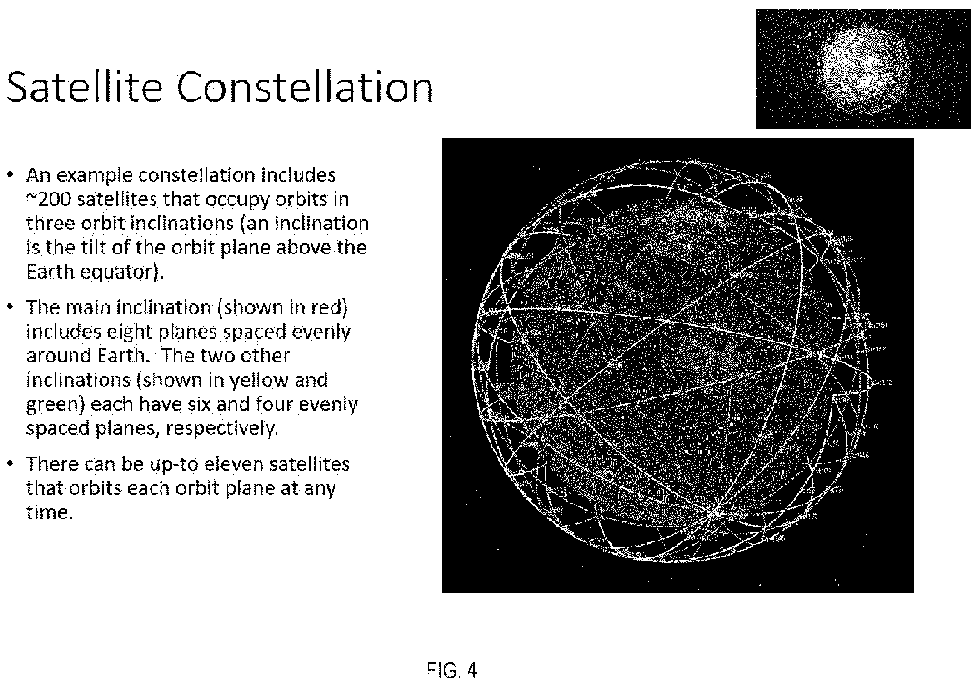

Figure 4 is an illustration of a satellite constellation, according to an embodiment;

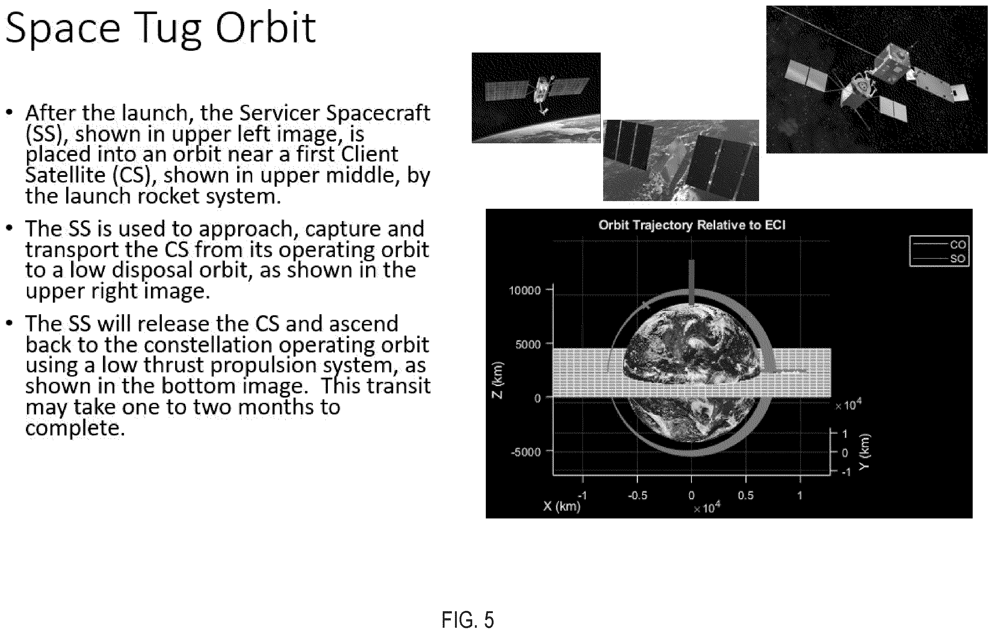

Figure 5 is an illustration of a space tug orbit, according to an embodiment;

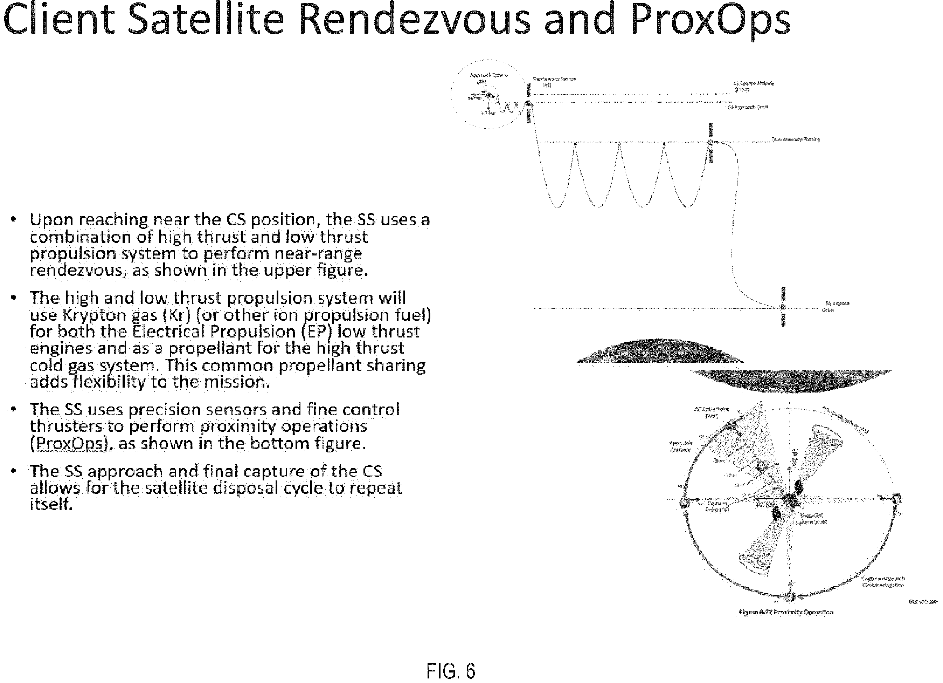

Figure 6 is an illustration of client satellite rendezvous and proximity operations (ProxOps), according to an embodiment; and
Figure 7 is a flow diagram of a method of servicing a client spacecraft, according to an embodiment.

### Detailed Description

Various apparatuses or processes will be described below to provide an example of each claimed embodiment. No embodiment described below limits any claimed embodiment and any claimed embodiment may cover processes or apparatuses that differ from those described below. The claimed embodiments are not limited to apparatuses or processes having all of the features of any one apparatus or process described below or to features common to multiple or all of the apparatuses described below.

Further, although process steps, method steps, algorithms or the like may be described (in the disclosure and / or in the claims) in a sequential order, such processes, methods and algorithms may be configured to work in alternate orders. In other words, any sequence or order of steps that may be described does not necessarily indicate a requirement that the steps be performed in that order. The steps of processes described herein may be performed in any order that is practical. Further, some steps may be performed simultaneously.

When a single device or article is described herein, it will be readily apparent that more than one device / article (whether or not they cooperate) may be used in place of a single device / article. Similarly, where more than one device or article is described herein (whether or not they cooperate), it will be readily apparent that a single device / article may be used in place of the more than one device or article.

The following relates generally to satellite servicing, and more particularly to systems and methods for satellite deorbiting using a servicer spacecraft.

Systems and methods for satellite deorbiting using a servicer spacecraft are provided. The systems and methods may support satellite constellations, such as in low Earth orbit (LEO). The servicer spacecraft may perform active deorbiting or may support self-deorbiting of client spacecraft. The servicer spacecraft includes a robotic payload for executing its deorbiting functions.

The present disclosure provides a servicer spacecraft that may fly with a load of constellation satellites in a shared launch (e.g., a constellation deployment launch of 16 with one servicer spacecraft and 15 constellation satellites).

The present disclosure provides a flexible client spacecraft servicing architecture that can start small and grow as needs become more quantifiable. For example, if it is thought that less than five percent of satellites will fail such that they need assistance, that would be greater than 10 satellites out of a 200 complement constellation over a 10 year period. That said, it could be ten times more or ten times less, and that may not be known or understood until flight. Further, approaches could change such that it is preferred to have all satellites go until they run out of propellant, in which case there may be a need to deorbit a whole fleet every 10 years. Generally, it may be desired to leave some operating satellites until the very end of life while replacing others. As such, a flexible system and method as provided herein is desired.

The present disclosure provides a system and method for servicing a client spacecraft with a servicer spacecraft. The system may be adapted to provide three different options. The three options may all use the same basic satellite bus for the servicer spacecraft. The satellite bus may be the same as the client spacecraft satellite bus. The servicer spacecraft common bus may be adapted on ground and launched to provide the preferred service option. The first option provides a very inexpensive on-demand servicer spacecraft. The servicer spacecraft launches only when required with a group of constellation satellites and services the occasional failures (e.g., unexpected) as they occur. The second option may be used when many more client spacecraft tows are needed and includes adapting the common servicer spacecraft bus to include a reusable/refuellable chemical propellant system and depot such that the servicer spacecraft can provide a constellation scale service to address the higher demand. The increased demand may also come from adjacent constellations (e.g., Space Domain Awareness). The third option may be used to tow many client spacecraft as part of a longterm management plan. The third option provides the most mass/cost effective-over-the-long-term solution of the three options. The third option provides replenishable satellites for self-deorbit. This may be a natural end when the client spacecraft are reliable and good for 10 years and their life is limited by propellant only. The third option may use a servicer spacecraft fleet that lives locally in each plane, is light, inexpensive, and provides to each client spacecraft only the amount of propellant require to deorbit one satellite (maximum mass/propellant efficiency). All of the foregoing options are variants of each other that may use a common shared spacecraft bus design (e.g., an AURORA^{™} spacecraft bus) and can be exchangeable on the ground depending on need. Key elements of the overall servicing architecture are the same among the three options and include client and servicer spacecraft control strategy, minimum mass/cost of servicing features on each client, and general orbit raising/lowering strategies. What varies among the options is the strategy for servicer propellant management, which includes a range including none (option 1), pre-placement of propellant in large orbital depots (option 2), and pre-placement of mass optimized single-serving fuel bubbles in orbit. This selectable element of the overall system architecture can evolve as needs evolve. It should be noted that the second option refers to the use of chemical propellant because EP thrusters have a throughput limitation currently that makes many trips for one servicer spacecraft not viable. In future, as throughput increases, EP may be viable.

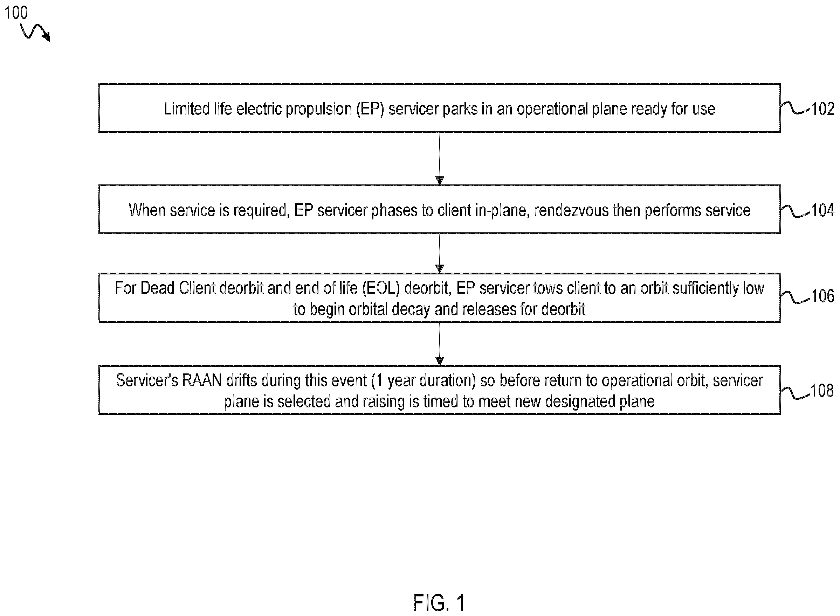

Referring now to Figure 1, shown therein is a general concept of operations method 100 for a satellite deorbiting system including an electric propulsion (EP) servicer spacecraft (or EP disposable tow truck), according to an embodiment. For the purposes of this disclosure, a non-limiting embodiment using Kr will be discussed, however the inventors envision other embodiments with equivalent or similar capabilities for systems using other ion propulsion propellants.

At 102, a limited life EP servicer parks in an operational plane ready for use.

At 104, when service is required, the EP servicer phases to a client satellite in-plane. The EP servicer rendezvous with the client satellite (comes into close proximity/contact with the client), captures the client satellite, and performs service. The service may include deorbit of the captured client satellite. The service may include refueling, repair, or inspection of the captured client satellite.

At 106, for dead client deorbit and end of life deorbit, the EP servicer tows the client satellite to an orbit sufficiently low enough to begin orbital decay. In some embodiments, the EP servicer tows the client satellite to 400km circular orbit or 350km perigee elliptical orbit, respectively (e.g., for a notional LEO constellation), and releases the client satellite for deorbit.

At 108, as the servicer's RAAN drifts while the servicer is towing the client into its disposal orbit(1 year duration), before the servicer returns to operational orbit, the servicer plane is selected and raising is timed to meet the new designated plane.

With multiple servicers per plane, there is a constant circulation among planes to ensure that wait time is minimized (though not necessarily rapid).

In an embodiment, each EP servicer of method 100 is capable of multiple (e.g., three or more) end of life deorbit missions. For a given constellation, a sufficient number of servicers can be selected to service the entire client grouping over its lifetime (e.g., 40 servicers).

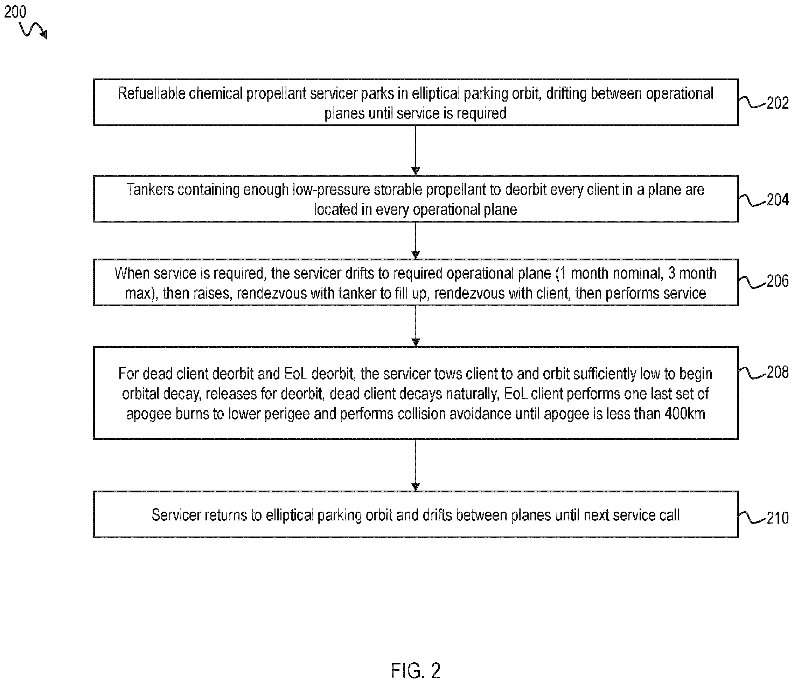

Referring now to Figure 2, shown therein is a general concept of operations method 200 for a satellite deorbiting system including a refuellable servicer spacecraft (or refuellable N₂H₄ tow truck), according to an embodiment. For the purposes of this disclosure, a non-limiting embodiment using N₂H₄ will be discussed, however the inventors envision other embodiments with equivalent or similar capabilities for systems using other low pressure storable propellants.

At 202, a refuellable chemical propellant servicer parks in elliptical parking orbit, drifting between operational planes until service is required.

At 204, tankers carrying enough N₂H₄ to deorbit every client in a plane are located in every operational plane.

At 206, when service is required, the servicer drifts to the required operational plane (1 month nominal, 3 month maximum) and raises. The servicer then rendezvous with the client satellite, captures the client satellite, and performs the service. The service includes deorbit of the client satellite.

At 208, for dead client deorbit and end of life deorbit, the servicer tows the client satellite to an orbit sufficiently low enough to begin orbital decay. In some embodiments, the EP servicer tows the client satellite to 400km circular orbit or 350km perigee elliptical orbit, respectively (e.g., for a notional LEO constellation), and releases the client satellite for deorbit. The dead client decays naturally. The end of life client performs one last set of apogee burns to lower perigee and performs collision avoidance until apogee is less than 400km (52 days on average).

At 210, the servicer returns to the elliptical parking orbit and drifts between planes until the next service call.

In an embodiment, method 200 uses two servicers at a high inclination (e.g., 73 degrees), one servicer at a middle inclination (e.g., 50 degrees), one servicer at a low inclination (e.g., 31 degrees), and a tanker containing three to four metric tons of hydrazine in each of the operational planes of the constellation.

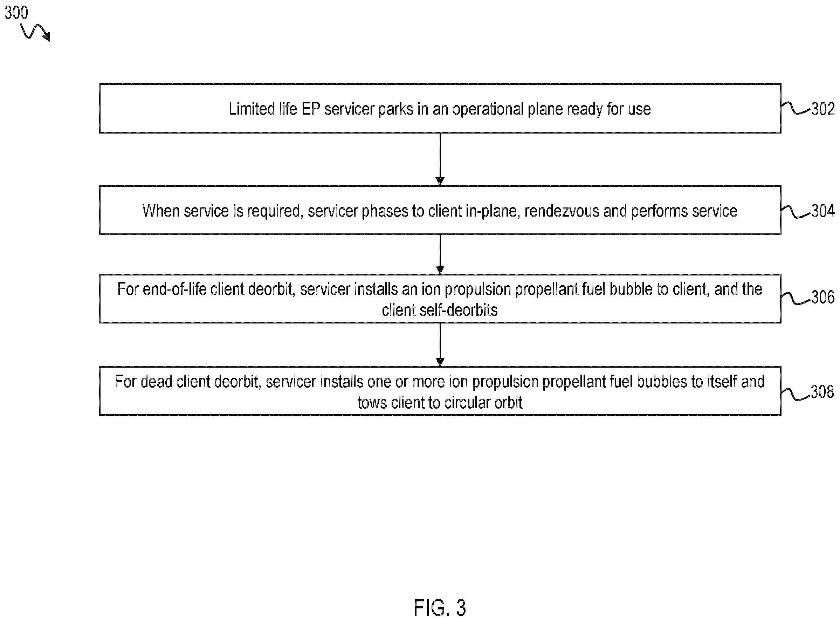

Referring now to Figure 3, shown therein is a general concept of operations method 300 for a satellite deorbiting system including an EP fuel dispenser servicer spacecraft (or EP replenishable fuel dispenser and tow), according to an embodiment.. For the purposes of this disclosure, a non-limiting embodiment using Kr will be discussed, however the inventors envision other embodiments with equivalent or similar capabilities for systems using other ion propulsion propellants.

At 302, a limited life EP servicer parks in an operational plane ready for use.

At 304, when service is required, the servicer phases to a client satellite in-plane. The servicer rendezvous with the client satellite and performs the service.

At 306, for an end of life client deorbit, the servicer installs a fuel bubble (e.g., 20kg Kr) to client and the client self-deorbits. As used in the present disclosure, "fuel bubble" refers to a self-contained, on-orbit installed fuel tank. The tank is designed for use in the space environment. The tank may include a composite overwrapped pressure vessel, suitable attachment fittings, a thermal management system, pressure transducers, and propellant/fuel quick disconnect valves for attaching to the client. The core function of the fuel bubble may, in some ways, resemble a CO₂ cartridge that is added to a home water carbonator. The fuel bubble may further include secondary attributes that enable carrying of the fuel bubble in space, attaching the fuel bubble safely in place, and keeping the fuel bubble alive while being used.

During the deorbit event (1+ years), the servicer's RAAN drifts.

In an embodiment, there is nominally only one servicer per operational plane so additional waiting time may be required to return to the designated plane. If more than one dead client satellite occurs, the servicers may swap operational planes to reduce return time.

At 308, for dead client deorbit, the servicer installs one or more ion propulsion propellant fuel bubbles to itself (e.g., 2×20kg fuel bubbles) and tows the client satellite to a circular orbit (e.g., 400km).

In an embodiment, method 300 uses one servicer per operational plane, totaling 18 servicers. Each servicer contains 12 fuel bubbles that are installed on clients for self-deorbit, plane change, or extended life.

In an embodiment, a combination of an EP disposable tow servicer (Figure 1) and an EP replenishable fuel dispenser and tow servicer (Figure 3) may be used. Such a system may be more cost and operationally efficient than using either alone. In an embodiment, an EP disposable tow servicer is used as a "launch on-demand" service to only deorbit dead clients and resident EP replenishable fuel dispenser and tow servicers are used for every other service. This may be more cost and operationally efficient than either servicer used alone. In a particular embodiment, the servicers performing the two methods 100, 300 are made to be identical.

Various use cases for the systems and methods of the present disclosure will now be described, according to embodiments.

### 1. Dead client satellite.

*(a) EP disposable tow truck (e.g.,* *Figure 1**)*: the servicer parked in-plane tows a client satellite to 350km circular using 2× fuel; launch-on-demand servicer raises, then tows the client satellite same as above using 2× fuel.
*(b) Refuellable N₂H₄ tow truck (e.g.,* *Figure 2**)*: the servicer parked in elliptical orbit matches client satellite RAAN, then raises, refuels itself with a designated in-plane tanker and tows the client to 350 circular using 2× fuel; launch-on-demand servicer raises, refuels itself with the in-plane tanker, then tows the client same as above using 2× fuel.
*(c) EP replenishable fuel dispenser and tow truck (e.g.,* *Figure 3**):* the servicer parked in-plane tows client to 350km circular, then returns to operating orbit using 6x fuel bubbles installed to self; launch-on-demand servicer raises and installs fuel bubble to itself, then tows the client as above.

### 2. End of life client satellite.

*(a) EP disposable tow truck (e.g.,* *Figure 1**)*: the servicer parked in plane tows client to elliptical demise orbit using 1× fuel; launch-on-demand servicer raises then tows the client same as above (1a).
*(b) Refuellable N₂H₄tow truck (e.g.,* *Figure 2**):* the servicer parked in elliptical orbit matches client satellite RAAN, then raises, refuels itself with designated in-plane tanker and tows the client satellite to elliptical demise orbit using 1× fuel; launch-on-demand servicer raises, refuels with tanker, then tows the client using 1× fuel.
*(c) EP replenishable fuel dispenser and tow truck (e.g.,* *Figure 3**):* the servicer parked in-plane installs fuel bubble to client satellite for self-deorbit using 1× fuel bubble; launch-on-demand servicer raises then attaches fuel bubble to the client same as above (1c).

### 3. Spare client satellite changes RAAN plane.

*(a) EP disposable tow truck (e.g.,* *Figure 1**)*: the servicer in plane tows client to 400km circular, then raises to match new plane using 4× fuel (one time operation) for 'fast' RAAN change OR 2× fuel if willing to wait up to 7.5months for 'slow' RAAN change; launch-on-demand servicer raises then same as above (1a) for fast or slow RAAN change.
*(b) Refuellable N₂H₄tow truck (e.g.,* *Figure 2**):* the servicer at elliptical parking orbit matches RAAN, then raises, refuels at in-plane tanker, lowers client satellite to elliptical, then raises the client at RAAN, refuels at in-plane tanker, then lowers to elliptical parking orbit using 1.66x fuel for 'slow' RAAN change; launch-on-demand servicer does same as above (1b).
*(c) EP replenishable fuel dispenser and tow truck (e.g.,* *Figure 3**):* the servicer in-plane installs fuel bubble to client satellite using 2× fuel bubble; launch-on-demand servicer raises then attaches 2× fuel bubble to client for 'slow' RAAN change, 'fast' RAAN change is 4× fuel bubbles.

### 4. Extend life of client satellite.

*(a) EP replenishable fuel dispenser and tow truck (e.g.,* *Figure 3**):* the servicer in-plane installs fuel bubble to client satellite using 1× fuel bubble; launch-on-demand servicer raises then attaches 1× fuel bubble to the client.

### 5. Inspection or repair of client satellite.

*(a) EP disposable tow truck (e.g.,* *Figure 1**)*: the servicer in plane phases to client satellite using minimal fuel; launch-on-demand servicer raises then same as above (1a).
*(b) Refuellable N₂H₄ tow truck (e.g.,* *Figure 2**):* the servicer at elliptical parking orbit matches RAAN, then raises and inspects, then lowers to elliptical parking using 2/3 fuel; launch-on-demand servicer does same as above (1b).
*(c) EP replenishable fuel dispenser and tow truck (e.g.,* *Figure 3**):* servicer in-plane phases to client satellite using minimal fuel; launch-on-demand servicer raises then same as above (1c).

In the above use cases for the EP disposable tow truck, 1 quanta of fuel equals fuel to execute one end of life deorbit (= 50kg Kr). The available fuel per servicer is 210kg plus margin.

In the above use cases for the refuellable N₂H₄ tow truck, 1 quanta of fuel equals fuel to execute one end of life deorbit (= 260kg N₂H₄). The servicer is refuellable with 260kg plus margin per trip.

In the above use cases for the EP replenishable fuel dispenser and tow truck, 1 quanta of fuel equals one fuel bubble to deorbit end of life deorbit (= 20kg Kr). Each tank (fuel bubble) has 20kg and each servicer carries a rack of 12 tanks (could be more).

Various system architectures for the satellite deorbiting systems and methods of the present disclosure will now be described.

In an embodiment, a system for satellite deorbiting includes an EP disposable tow servicer and a plurality of client satellites.

The EP disposable tow servicer includes a spacecraft with a robotic payload. The robotic payload is configured to capture and secure the client satellite being serviced. The servicer spacecraft includes a set of EP thrusters, a set of power processing units (PPUs), and ion propulsion propellant fuel capacity. The spacecraft includes a set of cold gas thrusters and control for rendezvous and proximity operations (RPO). The spacecraft includes offset/extended antennas for telemetry, command, and ranging (TCR) around client satellite. The life of the servicer spacecraft may be limited by EP thruster maximum throughput and ion propulsion propellant tank size/mass.

The client satellite is adapted to include a grapple fixture and machine vision target on its anti-Earth deck. The machine vision target may be used, imaged and processed by the servicer to guide client satellite capture by the servicer. The grapple fixture is configured for grappling and rigidization by a robotic grappler of the servicer.

In a particular embodiment, the servicer is an adapted spacecraft. The RF payload is removed and replaced with the robotic payload. Two times more EP thrusters, power processing units (PPUs), and plus 40kg of Kr fuel capacity beyond payload mass allocation (220kg total Kr) is added. Twelve cold gas thrusters and control for RPO are added. Offset/extended antennas are added for TCR around the client. Servicer spacecraft capabilities of such an embodiment may include: 4× End-of-Life (EoL) deorbits or 2 dead clients, or one 'fast' RAAN change, or 2× 'slow' RAAN changes, or 20 in-plane inspections/repairs (all limited by servicer tank size and EP thruster max throughput).

In another embodiment, a system for satellite deorbiting includes a refuellable N₂H₄ tow servicer and a plurality of client satellites.

The refuellable N₂H₄ tow servicer includes a robotic payload. The robotic payload is configured to capture and secure the client satellite being serviced. The servicer has power reduced to 600W. The servicer has an added N₂H₄ capacity. The servicer includes a set of aft engines for orbit changing. The servicer includes a set of small thrusters for RPO. The servicer includes a robotically-compatible refueling interface for N₂H₄ (e.g., Orbitfab's RAFTI or Northrop Grumman's PRM). The spacecraft includes offset/extended antennas for telemetry, command, and ranging (TCR) around client satellite.

The life of the servicer spacecraft may be limited by servicer tank cycles (diaphragm) and small thruster maximum throughput.

The client satellite is adapted to include a grapple fixture and machine vision target on its anti-Earth deck. The machine vision target may be used imaged and processed by the servicer to guide client satellite capture by the servicer. The grapple fixture is configured for grappling and rigidization by a robotic grappler of the servicer.

In a particular embodiment, the servicer is an adapted spacecraft. The RF payload is removed and replaced with the robotic payload. EP thrusters and PPUs are removed and power is reduced to 600W. N₂H₄ capacity is increased to 290kg. Six 22N aft engines are added for orbit changing. For RPO, 12 small thrusters are added. A robotically compatible refueling interface for N₂H₄ is added. Offset/extended antennas for TCR around client satellite are added. Servicer spacecraft capabilities of such an embodiment may include: many EoL deorbits (11 clients per tanker), or many dead clients (5 clients per tanker), or many 'slow' RAAN changes, limited by servicer tank size (not large enough for 'fast' RAAN change) (6 clients per tanker), and many in-plane inspections/repairs.

In another embodiment, a system for satellite deorbiting includes an EP disposable tow servicer and a plurality of client satellites.

The EP replenishable fuel dispenser and tow servicer includes a spacecraft with a robotic payload. The robotic payload is configured to capture, secure, and/or add a propulsion pack to the client satellite being serviced. The servicer spacecraft includes a set of EP thrusters and a set of power processing units (PPUs). The spacecraft includes a set of cold gas thrusters and control for rendezvous and proximity operations (RPO). The spacecraft includes offset/extended antennas for telemetry, command, and ranging (TCR) around client satellite. The spacecraft includes restraint accommodations for a fuel bubble rack or storage module. The spacecraft includes an interface for robotically installed fuel bubbles (and/or increased Kr capacity). The life of the servicer spacecraft may be limited by EP thruster maximum throughput (because this servicer is 'replenishable' by attaching fuel bubbles to itself, if more thrusters are added, longer operational life is possible).

The client satellite is adapted to include a grapple fixture and machine vision target on its anti-Earth deck. The machine vision target may be used imaged and processed by the servicer to guide client satellite capture by the servicer. The grapple fixture is configured for grappling and rigidization by a robotic grappler of the servicer.

The client satellite is further adapted to include one or more robotically compatible ion propulsion propellant refueling ports. The ports are configured to be grasped and interfaced using a robotic system (e.g., the robotic payload described herein). The refueling ports may be made robotically compatible by including fiducial markings of some kind and a mechanical interface that permits capture and rigidization to allow the fuel umbilical/quick connects to be connected.

In a particular embodiment, the servicer is an adapted spacecraft. The RF payload is removed and replaced with the robotic payload. Two times more EP thrusters and PPUs are added. Twelve cold gas thrusters and control for RPO are added. Offset/extended antennas are added for TCR around the client. Restraint accommodations for a fuel bubble rack are added. An interface for one or two robotically installed fuel bubbles is added (and/or increase Kr capacity to 180kg). Servicer spacecraft capabilities of such an embodiment include: 20x end of life deorbits per plane (limited by thruster max throughput), or 1 dead client + 4 EoL visits (limited by EP thruster max throughput), or 3 'fast' RAAN changes, or 6 'slow' RAAN changes (limited by number/size of bubbles, launch another rack or increase bubble size up to 20 events), or 20 client life extensions (limited thruster max throughput), or 20 in-plane inspections/repairs.

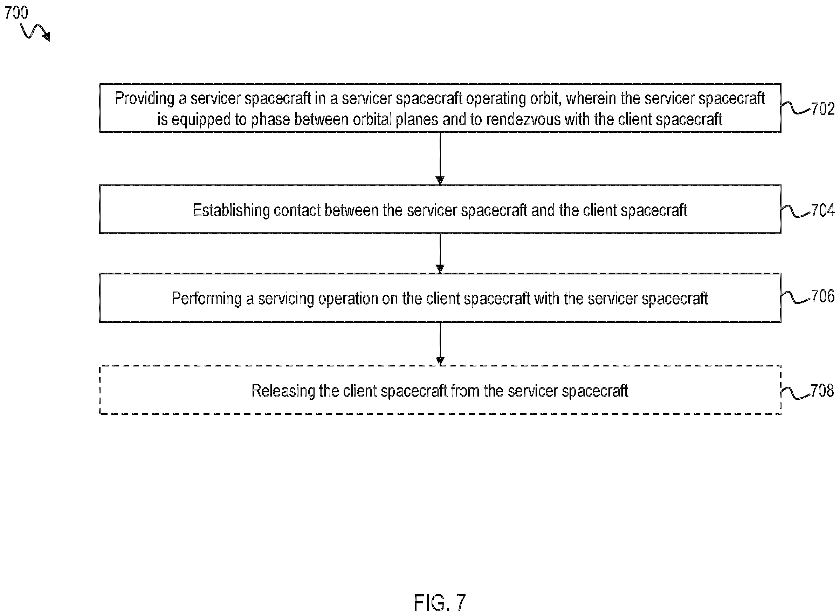

Referring now to Figure 7, shown therein is a method 700 of servicing a client spacecraft, according to an embodiment. The client spacecraft is in a client spacecraft orbit. The client spacecraft may be part of a constellation of client spacecrafts.

At 702, the method 700 includes providing a servicer spacecraft in a servicer spacecraft operating orbit. The servicer spacecraft is equipped to phase between orbital planes and to rendezvous with the client spacecraft.

The servicer spacecraft operating orbit may be an in-plane orbit with the client spacecraft orbit.

Where the client spacecraft is part of a constellation of client spacecrafts, the servicer spacecraft may be launched alongside the client spacecrafts in the constellation. One advantage of this approach is that the servicer spacecraft, which may be using the same satellite bus as the client spacecraft, can be launched interchangeably with a client. That is, on very short notice, a constellation operator may switch out a client satellite for a servicer spacecraft to meet the needs of the constellation. So, if a solar storm causes early failure of clients, the operator may decide to perform more deorbiting missions to clear out the orbit for new assets. Or, in reverse, if the constellation average life is particularly good at a point in time, the operator may fly a client satellite instead of a planned servicer launch.

The servicer spacecraft may be built using the same satellite bus and the client spacecraft.

At 704, the method 700 includes establishing contact between the servicer spacecraft and the client spacecraft.

The servicer spacecraft may be parked in an elliptical orbit and the servicer spacecraft matches the client spacecraft orbit right ascension of the ascending node (RAAN) prior to rendezvous and establishing contact.

At 706, the method 700 includes performing a servicing operation on the client spacecraft with the servicer spacecraft.

Performing the servicing operation may include deorbiting the client spacecraft. De-orbiting the client spacecraft may include towing the client spacecraft using the servicer spacecraft to a low orbit which facilitates orbital decay. The low orbit may be a 400km circular orbit. The low orbit may be a 350km perigee elliptical orbit. The servicer spacecraft may refuel itself with a tanker orbiting in-plane with the client spacecraft.

The servicing operation may include installing a fuel bubble to the client spacecraft. The servicing operation may further include self-deorbit of the client spacecraft. The client spacecraft may self-deorbit by phasing itself to a low orbit which facilitates orbital decay.

The servicing operation may include an inspection operation and/or a repair operation.

Optionally, at 708, the method 700 includes releasing the client spacecraft from the servicer spacecraft. Releasing the client spacecraft may not be needed where a dead satellite is being tugged into an orbital decay and the servicer spacecraft is disposable, as both client and servicer may be left to remain attached and burn up together.

While the above description provides examples of one or more apparatus, methods, or systems, it will be appreciated that other apparatus, methods, or systems may be within the scope of the claims as interpreted by one of skill in the art.

## Claims

1. A method for servicing a client spacecraft, the client spacecraft in a client spacecraft orbit, the method comprising:
providing a servicer spacecraft in a servicer spacecraft operating orbit, wherein the servicer spacecraft is equipped to phase between orbital planes and to rendezvous with the client spacecraft;
establishing contact between the servicer spacecraft and the client spacecraft; and
performing a servicing operation on the client spacecraft with the servicer spacecraft.

2. The method of claim 1, wherein performing the servicing operation includes deorbiting the client spacecraft.

3. The method of claim 2, wherein de-orbiting the client spacecraft involves towing the client spacecraft using the servicer spacecraft to a low orbit which facilitates orbital decay.

4. The method of claim 3, wherein the low orbit is a 400 km circular orbit or 350 km perigee elliptical orbit.

5. The method of claim 4, wherein the servicer spacecraft refuels itself with a tanker orbiting in-plane with the client spacecraft.

6. The method of claim 3, wherein the servicer spacecraft operating orbit is an in-plane orbit with the client spacecraft orbit.

7. The method of claim 1, wherein the servicing operation includes installing a fuel bubble to the client spacecraft.

8. The method of claim 7, wherein the servicing operation further includes self-deorbit of the client spacecraft.

9. The method of claim 8, wherein the client spacecraft self-deorbits by phasing itself to a low orbit which facilitates orbital decay.

10. The method of claim 2, wherein the servicer spacecraft operating orbit is an elliptical orbit, and wherein the servicer spacecraft matches the client spacecraft orbit right ascension of the ascending node (RAAN) prior to establishing contact.

11. The method of claim 1, wherein the servicing operation is one or more of an inspection operation and a repair operation.

12. The method of claim 10, wherein the servicing operation is one or more of an inspection operation and a repair operation.

13. The method of claim 11, wherein the servicer spacecraft operating orbit is an in-plane orbit with the client spacecraft orbit.

14. The method of claim 3, wherein the servicer spacecraft returns to the servicer spacecraft operating orbit.

15. The method of claim 1, wherein the client spacecraft is part of a constellation of client spacecrafts.
